# EUROPEAN PATENT SPECIFICATION

(11) **EP 2 926 794 B1**
(45) Date of publication and mention of the grant of the patent: **06.09.2017**
(21) Application number: 15158113.9
(22) Date of filing: 06.03.2015
(51) Int. Cl.: A61J 1/20, B01J 47/00, B01J 47/04, B01J 47/012

(54) **Ready-to-use device and method for removing interfering factors from samples to be subjected to microbiological examination**
GEBRAUCHSFERTIGE VORRICHTUNG ZUR ENTFERNUNG STÖRENDER FAKTOREN AUS PROBEN VOR EINER MIKROBIOLOGISCHEN UNTERSUCHUNG
DISPOSITIF PRÊT À L'EMPLOI ET PROCÉDÉ POUR ÉLIMINER LES FACTEURS D'INTERFÉRENCE D'ÉCHANTILLONS À SOUMETTRE À UN EXAMEN MICROBIOLOGIQUE

(30) Priority: 17.03.2014 IT VR20140062
(43) Date of publication of application: 07.10.2015
(73) Proprietor: AL.CHI.MI.A. S.r.l., 35020 Ponte San Nicolò (PD) (IT)
(72) Inventor: Beccaro, Mauro, 35010 Cadoneghe (IT); Bettini, Enrico, 30032 Fiesso D'Artico (IT); Signori, Paolo, 37131 Verona (IT)
(74) Representative: Ponchiroli, Simone

(56) References cited:
- EP-A1- 1 484 073
- WO-A1-2014/076640
- US-A- 4 145 304
- US-A- 4 960 130
- US-A1- 2004 120 942
- US-A1- 2006 167 380
- US-A1- 2009 123 960

## Description

This invention relates to a device and a method for removing interfering factors from samples to be subjected to microbiological examination.

In the context of this invention, microbiological examination means any examination intended either to verify the microbiological negativity of a sample, or to measure its degree and type of microbiological contamination.

Microbiological negativity is one of the parameters usually required for organs, tissues or cells intended for transplantation whose effective implantability must be checked, and for an injectable medicine to be put on sale, or for a substance derived from humans which is also intended to be administered to a patient. In fact, in all of these cases, the absence of microbiological negativity could result in serious consequences for the patient.

In contrast, the check of the degree and type of microbiological contamination is usually performed in the case of laboratory examinations or tests of bodily fluids taken from a person, where the aim is not to check for the existence of a sterile condition, but rather to check whether or not there is an infection.

The methods currently used for microbiological examinations are generally based on bacterial reproduction. In fact, the sample to be examined is placed in a culture environment able to promote bacterial reproduction which causes the formation of substances which are then detected by suitable equipment (for example, in many applications what is detected is an increased degree of cloudiness of the culture liquid or the production of gas, in most cases carbon dioxide, by means of detection of a change of colour/luminescence due to chromogenic agents which are sensitive to the gas).

It is easy to infer how the results of such analyses may be distorted if, despite the presence of microbial contaminations, conditions arise which prevent normal bacterial reproduction. In particular, it is known that a bacterial contamination present may not be detected if the sample being examined is also contaminated by one or more substances which act as interfering factors. In fact, the term "interfering factor" identifies any substance able to inhibit or slow bacterial reproduction and it will be used with that meaning hereinafter in this description. Therefore, that definition includes bactericidal agents such as antibiotics, and bacteriostatic agents such as disinfectants, as well as natural substances such as proteins and immunoglobulins.

However, in the context of the main applications of this invention, the most common interfering factor is antibiotics.

Such substances on one hand may be present in an organism from which an organ, a tissue, cells or fluids are taken (for example due to an antibiotic treatment to which the subject was previously subjected), and on the other hand are always present in the liquids used for the decontamination and preservation of tissues, organs and cells intended for transplantation.

The problem of interfering factors is even more evident in the case of checks of the sterility of injectable medicines, since the medicine itself usually acts as an interfering factor if it is an antibiotic, a bacteriostatic agent or a medicine derived from humans.

Consequently, in order to be able to consider the result of a microbiological examination reliable, one must be certain that the sample examined is not contaminated by interfering factors, that is to say, the sample examined must be subjected to a process to purify it by removing any interfering factors from it.

Microbiological checks of bodily fluids (including blood and urine) are usually carried out using automated equipment in which the sample to be examined is inserted in a bottle containing a suitable culture broth. The various known automated equipment includes the BacT/ALERT® made and marketed by BioMérieux SA with registered office in Marcy l'Etoile, France, and the BACTEC™ made and marketed by BD with registered office in Franklin Lakes, NJ, USA. In order to attempt to overcome the problem of interfering factors, both of these pieces of equipment require that the sample to be analysed is inserted in a bottle which at the same time contains a culture liquid for the micro-organisms and polymeric resins for inhibiting the action of any interfering factors present, as well as substances inhibiting the bacteriostatic action of proteins and immunoglobulins present. When the sample has been in the bottle for a predetermined period of time, the microbiological examination is performed by checking for any increase in the quantity of gas (carbon dioxide) present compared with at the start of the examination.

Examples of the use of resins for removing interfering factors are also described in patents US 4632902, US 5624814, EP 73089, US 4174277, US 4145304, US 5162229, US 2009/123960, US 2011/312021 and US 5314855. The main problem of this type of examination/equipment is low sensitivity. In fact, it is known that in order to be able to check for the effective presence of a contamination, the number of bacteria (or rather of colony forming units - CFU) present in the bottle must be at least equal to a predetermined minimum value. Below that threshold detection is impossible and the test result is a false negative. Moreover, as already indicated, tests run on blood and urine do not aim to check for microbiological negativity, but rather to check that the level of contamination is not greater than a threshold value scientifically acknowledged to be discriminating in order to be able to diagnose the existence of an infection. Consequently, in reality, the known equipment can provide good clinical results provided that the blood/urine sample available is large enough.

However, regarding blood tests, it should be noticed that the quantity of blood required by the equipment may be negligible if taken from an adult, but may be significant if taken from a new born baby or in any case a child (especially if several samples are required for several tests).

The matter of checking for microbiological negativity is different and more critical, especially with reference to the transplant sector, to which this invention is particularly dedicated (since this invention is preferably intended for the transplant sector, hereinafter reference will preferably be made to that sector, although, if applicable, all assessments expressed shall still also be considered valid for any other possible application of this invention).

In the transplant sector, ensuring that an organ, a tissue or cells to be implanted in a patient are free of contaminations is essential in order to reduce the risks linked to this type of surgery. In addition to the possible risks immediately obvious, such as the onset of infections in the implantation zone (with the risk of rejection phenomena), a contamination could in fact also bring risks of the development of infections in other sites not directly linked to the surgery. Once they are in the circulatory system any bacteria spread throughout the body and may therefore reach any site suitable for their proliferation (this phenomenon cannot be ruled out as being the basis of many infections apparently unrelated to the surgery which affect transplant recipients).

Those responsible for guaranteeing microbiological negativity of organs, tissues and cells are firstly transplant centres for organs, and, for tissues and cells, the relative banks. Therefore, they have accurate microbiological examinations for each organ, tissue or set of cells to be implanted. In particular, at present microbiological examinations on tissues, organs and cells intended for transplantation may be carried out either on a sample of what is to be implanted (or on what has been implanted in the case of post-operative checks), or on a sample of the preservation/decontamination liquid in which the organ, tissue or cells were preserved before being implanted (most tissues and cells intended for implantation undergo a decontamination process by immersion in a decontamination liquid which includes a plurality of broad-spectrum antibiotics).

The main problem of this sector is that there are currently no known methods or equipment specifically intended for this type of microbiological examination (that is to say, for examinations to check for microbiological negativity). Tissue and cell banks do not even currently have a single procedure for checking for microbiological negativity.

Therefore, at present, examinations to check for microbiological negativity are usually carried out using the equipment created for blood and urine tests (such as the BacT/ALERT® and the BACTEC™ described above), by inserting in the bottles the samples to be analysed in place of blood or urine.

However, as already indicated, such systems were not designed to check for microbiological negativity, and they suffer limited sensitivity which prevents them from detecting bacterial contaminations when the ratio between the number of bacteria (CFU) and the quantity of interfering factors present falls below a predetermined minimum threshold. In fact, with the culture broths and times currently used for examinations using the known equipment, contamination is only evident when the ratio between CFU and interfering factors exceeds that minimum threshold. Below said threshold, any bacterial multiplication which may occur is in fact insufficient to be detected in the times set. Consequently, a negative result for an examination performed using such equipment does not necessarily mean microbiological negativity. It is possible that the level of contamination of the sample is such that it cannot be detected and so gives a false negative. Although limited, the risk related even to slight contamination must not be ignored in the case of transplants.

A further problem relating to the use of equipment designed for blood and urine, for checking bacterial contamination in the transplant sector, is linked to the fact that, as already indicated, tissues and cells intended for transplantation are subjected to important decontamination processes with liquids that have a high interfering factor content. As a result, the sample examined (even if it is not the self-same decontamination liquid) contains a large quantity of interfering factors, in many cases much higher than that which could ever be present in a biological fluid such a blood or urine. The main problem linked to this situation is the fact that the known methods and equipment are not able to eliminate/sufficiently inhibit such large quantities of interfering factors, consequently they may freely manifest their effect on any bacterial contamination present, again creating false negatives, whenever the ratio between CFU and the quantity of interfering factors is below said minimum threshold.

In particular, the known equipment is not able to eliminate/ sufficiently inhibit the interfering factors at least with the quantities of resins and in the culture times currently usable with such equipment. Therefore, as seen, the background art in the field of microbiological examinations has significant disadvantages.

In an attempt to overcome these disadvantages, the Applicant recently developed a ready-to-use device for removing interfering factors which is the subject matter of Italian patent application No. VR2012A000229 (still confidential at the date this patent application was filed), and which may be used with various types of samples to be subjected to microbiological examination, such as a liquid for processing an organ, tissue or cells intended for transplantation, or a sample of an organ, tissue or cells intended for transplantation, or a bodily fluid taken from a person, or a medicine, or a substance derived from humans (where the term processing liquid refers to a fluid previously used to treat an organ, tissue or cells, such as a preserving fluid or a decontaminating fluid).

That patent application in particular includes a description of two preferred embodiments of the device which are associated thanks to the fact that they comprise a container in which the sample to be treated can be placed, the container also containing a product in granular form (advantageously one or more resins) for removing interfering factors. Said product is in turn retained by a porous wall which allows the transit of liquid.

According to a first embodiment described in said patent application, the device is constituted of a syringe in which the granular substance is positioned between the movable stopper and a porous sealing separator located close to the supply nozzle.

According to a second embodiment, the device in contrast comprises an openable container in which a porous bag containing the granular substance is inserted.

Although that device has already allowed excellent experimental results to be obtained, the tests carried out showed how it still has some limitations.

First, having devices which are structurally different depending on the sample to be treated (syringe for liquid samples and openable container for solid samples) means that the user has to have a supply of device of each type.

Second, since removal of interfering factors takes time (several minutes or tens of minutes), after insertion of the sample the devices must be put aside. But first the operator must ensure that they are properly closed and/or must put them aside carefully to avoid loss of the sample, which is relatively complex with the syringe-shaped device.

Third, some tests carried out revealed that in some circumstances the porous wall which retains the resins may also retain the micro-organisms, distorting the results of the subsequent tests.

It must finally be noted that US 4,960,130, which does not relate to interfering factors removal, discloses a device for collecting biological fluids and preparing samples to be analyzed which has a syringe-like shape, where the element corresponding to the syringe stopper is porous and internally defines a first chamber, while the element corresponding to the syringe plunger internally defines a second chamber. A third chamber is defined between the element corresponding to the syringe stopper and that corresponding to the syringe outer barrel.

Moreover, the element acting as the syringe stopper is permeable to liquids to allow a pouring of a biological fluid from the third chamber into the second chamber, and vice versa, passing through the first chamber where a product able to collect substances to be analyzed is present. The whole device can then be disassembled to allow access to substances to be analyzed contained in the first chamber.

US4960130 discloses an apparatus for collecting biological fluids and handling the same into a sample for testing. Such an apparatus comprises a tubular container having open ends, one of which is removably secured to a collection storage unit. A shuttle assembly constructed of a cylindrical hollow piston defining a chamber, a top cover covering one end of said piston, a second cover with an aperture and a connector covering the second end of the piston, is slidably mounted in the tubular container. An "O" ring is mounted on the exterior surface of the piston to form a fluid tight seal between the "O" ring and the interior surface of the tubular container with the connector being removably secured to a resin/sample container so that movement of the piston in the tubular container carries the resin/sample container into the collection storage unit and forces fluid collected in the tubular container to flow through the resin/sample container.

EP 1484073 discloses a sanitary recovering instrument capable of positively recovering, when excessive chemical liquid and interfusing gas are to be discarded from a liquid filled container pre-filled with a liquid and sealed, them into a closed space. The recovering instrument comprises a container body, a hollow needle tube, a gasket, an enclosing member, a cap, and a holder. When the needle tube is allowed to puncture the elastic membrane of the liquid-filled container, excessive chemical liquid and interfusing air are introduced into a storing space in the container body via the needle tube to thereby move the gasket slidingly and increase the volume of the space according to the amount introduced.

US 2009/0123960 discloses methods for removing inhibitors of microbial growth, including antibiotics, from a biological sample suspected of containing one or more microorganisms. The methods include contacting a sample, or a culture growth medium containing the sample, with reversed-phase adsorbent media, which remove the inhibitors of microbial growth, but allow the microorganisms of interest to remain in the sample or culture growth medium.

US 4145304 relates to microporous ion exchange and adsorbent resins and their use in the selective removal of charged antibiotics and other bacterial inhibitors from bacterially infected body fluid specimens. The resins are microporous ion exchange and adsorbent resins, which have been coated with a non-ionic detergent. It also discloses that a combination of such a detergent-treated non-functional polymeric adsorbent resin with a cationic resin selectively removes other bacterial inhibitors as well as antibiotics from bacterially infected body fluid specimens.

Finally, US 2004/120942 discloses a device for the preparation of thrombin or other blood products from whole blood, plasma, or a plasma fraction. Such a device comprises a reaction chamber having an inlet port and an outlet port, a filter located adjacent to the outlet port, an activating agent located inside the reaction chamber and an absorbent located inside the reaction chamber. The activating agent provides a surface for reaction.

In this context, the technical purpose which forms the basis of this invention is to provide a ready-to-use device and a method for removing interfering factors from samples to be subjected to microbiological examination which overcomes the above-mentioned disadvantages.

In particular, the technical purpose of this invention is to provide a ready-to-use device and a method for removing interfering factors from samples to be subjected to microbiological examination which allows the minimising, and preferably elimination, of the risk of false negatives in checks for microbiological negativity relating to samples intended for transplantation.

A further technical purpose of this invention is to provide a ready-to-use device and a method for removing interfering factors from samples to be subjected to microbiological examination which allows an increase in the detection sensitivity of the equipment and the methods currently known. Another technical purpose of this invention is to provide a ready-to-use device for removing interfering factors from samples to be subjected to microbiological examination which can be used for any type of sample (solid or liquid) and which does not require particular attention from the operator.

The technical purpose specified and the aims indicated are substantially achieved by a ready-to-use device and a method for removing interfering factors from samples to be subjected to microbiological examination as described in the appended claims.

Further features and the advantages of this invention are more apparent in the detailed description of a preferred, non-limiting embodiment of a ready-to-use device and a method for removing interfering factors from samples to be subjected to microbiological examination, with reference to the accompanying drawings, in which:
- Figure 1 is an exploded schematic side view of a first part of the device according to this invention;
- Figure 2 is a exploded schematic side view of a second part of the device according to this invention, the second part being connectable to the first part illustrated in Figure 1;

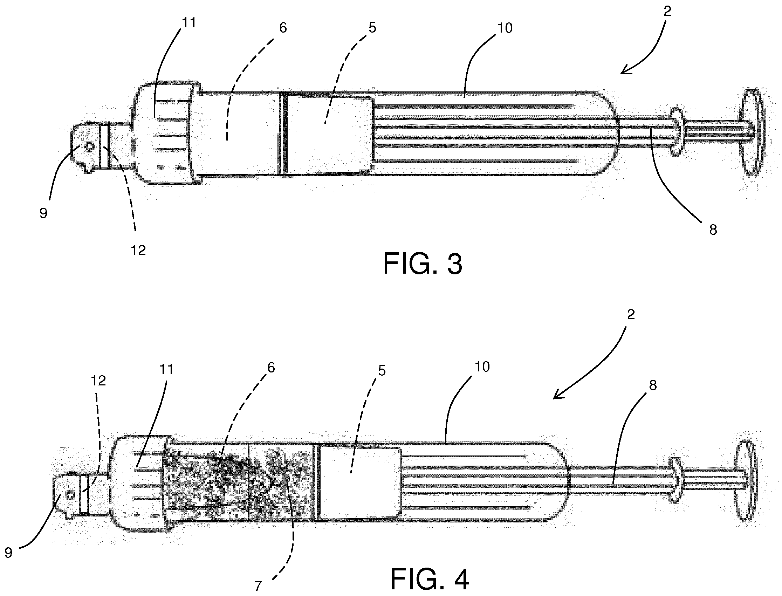

- Figure 3 is an assembled schematic side view of the part of the device of Figure 1;
- Figure 4 shows the part of the device of Figure 1 partly filled with a granular product for removing interfering factors;
- Figure 5 is a schematic side view of the device of Figures 1 and 3 in an assembled configuration; and
- Figure 6 shows an enlarged detail of the device of Figure 5 with some parts cut away to better illustrate others.

With reference to the accompanying drawings the numeral 1 denotes in its entirety a ready-to-use device for removing interfering factors from samples to be subjected to microbiological examination, made in accordance with this invention.

The device 1 in general comprises first an elongate containment body 2, extending between an open first end 3 and a second end 4 which is also advantageously open but has a transit opening which is smaller than that of the first end 3.

A stopper 5 is inserted slidably and in a liquidtight fashion in the containment body 2. Depending on the embodiments, the stopper 5 may be in various forms. For example, in the embodiment illustrated in the accompanying drawings it is advantageously made of plastic material and bell-shaped. However, in other embodiments it may be similar in shape to that of a common syringe. In general, however, the stopper 5 is impermeable to liquids and, during use, keeps the liquid confined between the stopper 5 itself and the first end 3 of the containment body 2.

The stopper 5 is movable between a first position in which it is closer to the first end 3 of the containment body 2 and a second position in which it is further away from the first end 3 than when it is in the first position. At least along the entire length of the stroke of the stopper 5 the containment body 2 has a constant internal cross-section. A chamber 6 with variable volume is created in the containment body 2 between the stopper 5 and the first end 3. At least one product 7 in the form of granules for removing interfering factors is inserted in said chamber. The volume of the chamber 6 with variable volume is determined by the position of the stopper 5 in the containment body 2.

Since, like any substance in the form of granules, the particle size measurement of the product 7 in the form of granules of this invention will always have a certain variation range, for its particle size measurement it will always be possible to identify mean values (arithmetic or harmonic) and, advantageously, a minimum size.

Consequently, in the context of this invention reference will be made to a nominal size of the granules which shall be understood to be the mean size and to a minimum size which deviates from the mean size by a deviation σ.

The product 7 in the form of granules present in the device 1 according to this invention may be any product suitable for the intended purpose.

Despite that, in the preferred embodiment (in which the device 1 is particularly suited to use related to the transplant sector), the product is a composition comprising a mixture of a first substance and a second substance, both in the form of granules. The first substance in turn comprises a first resin belonging to the ion exchange resins family, whilst the second substance comprises a second resin belonging to the non-ionic hydrophobic resins family.

The first substance and the second substance are present in a ratio to one another by weight of between 0.5 and 2, and preferably between 0.8 and 1.25 (in a particularly preferred embodiment the two substances are present in a ratio of 1:1).

Concerning the resins present in the first and second substances, in the preferred embodiments the first resin is methacrylate-divinylbenzene based whilst the second resin is polystyrene-divinylbenzene based. Amongst those belonging to these families, good results have been obtained in particular with Amberlite™ CG50 and Amberlite™ FPC3500 resins produced by Rohm and Haas of the US group The Dow Chemical Company, as the first resin, and with the resins C18 produced and marketed by MACHEREY NAGEL, and Amberlite™ XAD™4, Amberlite™ XAD™16 and Amberlite™ XAD™18 again produced by Rohm and Haas, as the second resins. Particularly good results have been obtained with a combination of Amberlite™ FPC3500 and Amberlite™ XAD™ 18. Obviously, all of the resins usable must be activated in advance by the washing usually required for them.

Returning to the structure of the device 1, a movement plunger 8 is connected or connectable to the stopper 5, and when it is connected it is positioned passing through the second end 4 of the containment body 2. Preferably, the transit opening through the second end 4 is such that it allows the passage of the movement plunger 8 and in contrast prevents the passage of the stopper 5.

A supply nozzle 9 is connected to the first end 3 of the containment body 2 and is in fluid communication with the chamber 6 with variable volume; during normal use, the nozzle 9 constitutes the only way through which a liquid can be inserted into and removed from the chamber 6 with variable volume (according to what indicated in the following). In the preferred embodiment illustrated in the accompanying drawings, the containment body 2 comprises a containment part 10 extending between the first end 3 and the second end 4 and a cap 11 removably mounted on the containment part 10 for closing it (partly, since, as explained below, it still leaves its fluid communication with the nozzle 9) at the first end 3. The nozzle 9 is associated with the cap 11, with which it advantageously forms a single part. Removal of the cap 11 allows access to the chamber 6 both for inserting the stopper 5 and the product 7 in the form of granules during the production step, and, as is explained in more detail below, for in use inserting any solid samples from which interfering factors are to be removed. For that purpose, the cap 11 may advantageously be connected to the containment body 2 by screwing it on in a liquidtight fashion.

A sealing separator 12 is mounted in the nozzle 9 for closing it so that it is at least sealed against the passage of liquid, and is made of an elastomeric material which can be pierced by a needle. In the preferred embodiment, the sealing separator 12 is a disk of elastomeric material inserted/fixed in the nozzle 9. Advantageously, said sealing separator 12 is similar to the separators commonly used in bottles for intravenous drips, such as bottles of physiological saline solution.

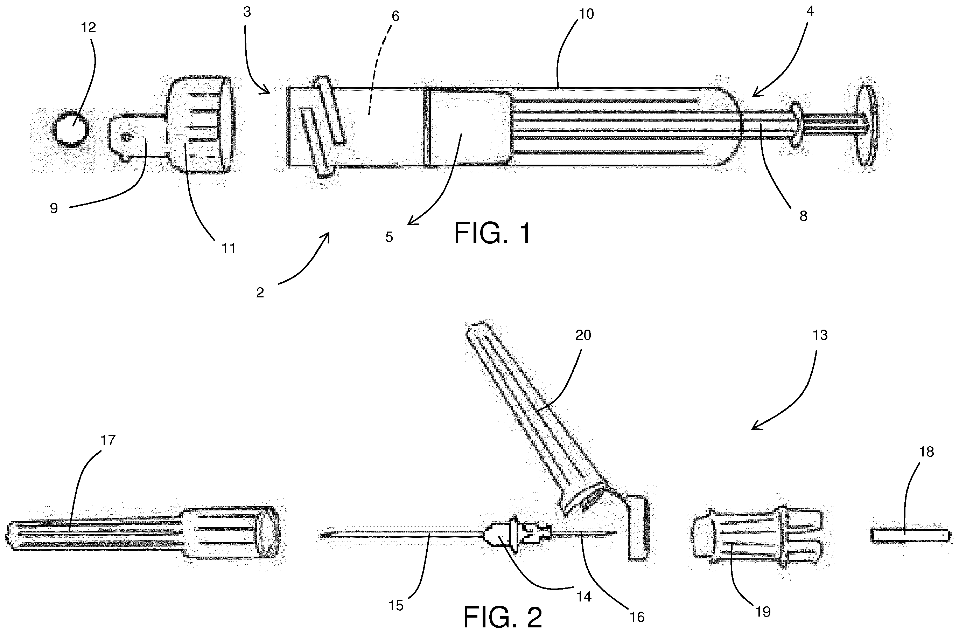

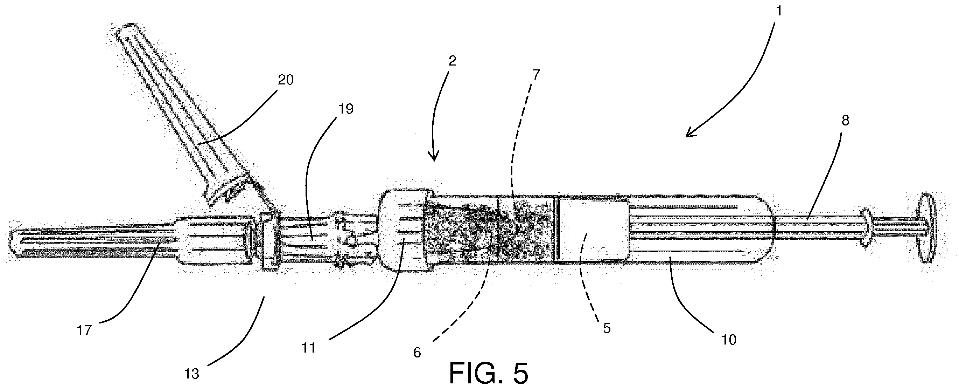

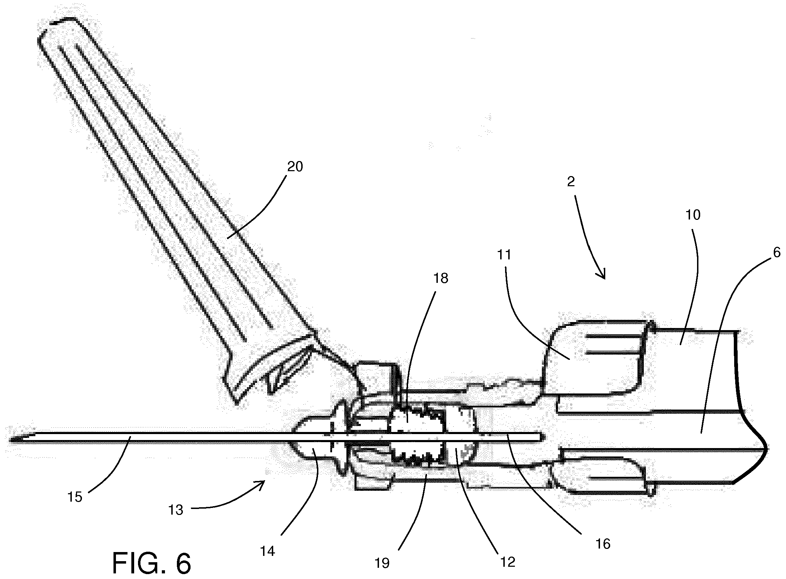

The device 1 according to this invention also comprises a suction and injection unit 13 couplable to the nozzle 9 and to the containment body 2, for allowing both suction of a liquid into the chamber 6 with variable volume, and then its expulsion from the chamber 6 with variable volume. As can be seen in Figures 2, 5 and 6, the suction and injection unit 13 comprises a connecting element 14 connectable to the nozzle 9, a first needle 15 fixed to the connecting element 14 and extending outwards from the connecting element 14 when the connecting element 14 is connected to the nozzle 9, and a second needle 16 fixed to the connecting element 14 and extending inside the nozzle 9 when the connecting element 14 is connected to the nozzle 9. The first needle 15 and the a second needle 16 are in fluid communication with one another and at least the second needle 16 has an inner transit opening which is smaller than the nominal size of the granules for preventing the granules from coming out of the chamber 6 through it. In fact, the suction and injection unit 13 is made in such a way that, when the connecting element 14 is connected to the nozzle 9 (Figure 6), the second needle 16 pierces the sealing separator 12, passes through it and puts in fluid communication the chamber 6 and the first needle 15 and therefore the chamber and the outside of the device 1. Moreover, thanks to the elastic properties of the material of which the sealing separator 12 is constituted, after a subsequent extraction of the second needle 16 from the sealing separator 12 the material of which the sealing separator 12 is constituted elastically closes the hole previously created by the second needle 16, preventing the contents of the chamber 6 from coming out through the hole (at least in the absence of external stresses on the stopper 5 which increase the pressure inside the chamber 6. In fact, it will always be possible to have a limit pressure beyond which the cut made in the sealing separator 12 is deformed until it allows the passage, for example, of a liquid).

In the preferred embodiment, the first needle 15 and the second needle 16 form a single part, and the connecting element 14 is fixed (advantageously overmoulded) to an intermediate portion of said single part.

Moreover, in the preferred embodiment, before use, both the first needle 15 and the second needle 16 are covered by a protective element, for example to keep them sterile until the moment when they are used (even if, obviously, the entire device 1 will advantageously be packed in a sterile package). For the first needle 15, the protective element is a first rigid cover 17 fixed on the connecting element 14, whilst for the second needle 16 there is a sheath 18 which covers it and which is pierceable by the second needle 16 when the suction and injection unit 13 is connected to the nozzle 9 (see Figure 6, in which the sheath 18, after interaction with the sealing separator 12, has been pierced and has scrunched up concertina-style).

Moreover, in the embodiment illustrated, the connection between the nozzle 9 and the connecting element 14 is not direct, but the suction and injection unit 13 also comprises a connector 19 fixable to the nozzle 9 (for example by screwing or with a bayonet fitting) and to which the connecting element 14 can be connected (removably or not). Furthermore, in the embodiment illustrated, the suction and injection unit 13 also comprises a second cover 20 which may be present either alternatively to the first cover 17 or in addition to it. This second cover serves only to protect the user and may be positioned on the first needle 15 by fitting at least partly laterally.

As regards operation of the device 1 according to this invention, its preferred operation varies depending if the sample to be subjected to removal of interfering factors prior to a subsequent microbiological examination is an exclusively liquid sample or a sample which is at least partly solid. However, it should be noticed that in both cases the steps described below are carried out in aseptic conditions.

In the case of a sample that is exclusively liquid, first the suction and injection unit 13 is connected to the containment body 2 and to the nozzle 9. During this step the second needle 16 pierces the sealing separator 12 and comes into fluid communication with the chamber 6 with variable volume. The first needle 15 is freed if necessary, and is inserted in the liquid to be treated. At that point the operator acts on the stopper 5 using the plunger 8 to increase the volume of the chamber 6 and suck the liquid sample into it. The sample therefore enters the chamber and makes contact with the product 7 in the form of granules.

In contrast, if the sample is solid, it can advantageously be inserted by opening the chamber 6 with variable volume (in the preferred embodiment this is done by removing the cap 11) and inserting at least the solid parts of the sample in it directly. However, before or after that operation, since the device 1 according to this invention always requires the presence of a liquid phase for correct removal of the interfering factors, if the sample does not have one, a liquid (advantageously free of interfering factors) must be added to the sample.

The liquid phase may be added before, after or simultaneously with the step of inserting the solid sample. Moreover, in the first two cases, insertion of the liquid phase may advantageously be carried out using the suction and injection unit 13 similarly to what is described relative to the exclusively liquid samples.

Once the sample, whether solid or liquid, has been correctly inserted in the chamber 6 with variable volume using the methods indicated above, the device 1 is preferably agitated, or at least positioned, in such a way that both the product 7 in the form of granules and any solid sample present make contact with or are immersed in the liquid present in the chamber 6 with variable volume. That configuration is maintained for a predetermined period of time (usually several tens of minutes). Moreover, advantageously, these steps are carried out after having removed the suction and injection unit 13 from the nozzle 9, in such a way that irrespective of the position of the containment body 2, the spontaneous outflow of liquid from the chamber 6 with variable volume is inhibited. It should be noticed that if the sample is solid, the predetermined period of time is normally longer than that required for a liquid sample, since, the other conditions being equal, for the solid sample the interfering factors also have to be able to come out of the sample.

When the predetermined period of time has elapsed, the sample to be subjected to microbiological examination can be extracted from the device 1 either by refitting the suction and injection unit 13 and pressing on the stopper 5, or by opening the cap 11.

This invention also relates to the method for removing interfering factors from a sample to be subjected to microbiological examination which uses at least one device 1 according to what is described above, as well as a method in which a plurality of said devices for removing interfering factors is used one after another in two or more steps one after another.

In fact, depending on requirements, the method may require the use of a single device 1 for the treatment, with a relatively long predetermined treatment time, or the use of several devices one after another, each for a shorter time. Moreover, in the latter case, in general the total treatment time is less than or equal to that of the former case, the results being equal.

In general, each step of using the device 1 comprises the operating steps of:
- connecting the connecting element 14 to the nozzle 9 in such a way that the second needle 16 pierces the sealing separator 12, passes through it and, through the first needle 15 and the second needle 16, puts the chamber 6 into fluid communication with the exterior;
- moving the stopper 5 from the first position to the second position and, through the first needle 15 and the second needle 16, sucking into the chamber 6 a liquid to be subjected to removal of interfering factors;
- leaving the liquid in contact with the at least one product 7 in the form of granules for a predetermined period of time; and
- subsequently moving the stopper 5 into the first position and, through the first needle 15 and the second needle 16, expelling the liquid from the chamber 6.

Moreover, depending on requirements, during the step in which the liquid is left in contact with the product 7 in the form of granules, it is also possible that the connecting element 14 is disconnected from the nozzle 9 to be connected again just before the step of liquid expulsion. In this case, when the connecting element 14 is not present, the liquid is kept within the device by the sealing separator 12.

Both the device 1 and the method according to this invention may advantageously be used for all cases in which the sample is either a processing liquid for an organ, tissue or cells intended for transplantation, or a sample of an organ, tissue or cells intended for transplantation, or a bodily fluid, or a medicine, or a substance derived from humans which is also intended to be administered to a patient.

As already indicated, the method for removing interfering factors according to this invention is intended for use as a preliminary process relative to a microbiological examination, for example performed using the above-mentioned prior art equipment. In fact, thanks to this invention, what is subjected to the microbiological examination is not the sample (liquid or solid) as such, as was the case until now, but the sample purified by removing the interfering factors from it. Considering that, the sample may also at that point be inserted in bottles without resins which therefore have a much more limpid culture liquid (the resins used in the bottles today in fact tend to cause cloudiness). Thanks to this invention it is therefore possible to significantly increase the sensitivity even of prior art equipment. With reference to the transplant sector, several preferred methods for removing interfering factors have also been provided.

A first example relates to corneas intended for transplantation. In this case the method comprises the suction of between 1 and 8 ml of liquid to be analysed for each gram of product 7 in the form of granules for removing interfering factors present in the device 1, agitating the containment body 2 (preferably by inverting it several times) at ambient temperature for 15/20 minutes to promote the removal of interfering factors and directly expelling the liquid through the first needle 15 into the bottle for microbiological analyses (such as a BACTEC bottle).

A second example relates to the sector of tissues intended for transplantation. In this case the method comprises the insertion of between 1 and 8 ml of liquid to be analysed for each gram of product 7 in the form of granules for removing interfering factors present in the device 1, agitating the containment body 2 (preferably by inverting it several times) at ambient temperature for 15/20 minutes to promote the removal of interfering factors and directly expelling the liquid into the bottle for microbiological analyses (such as a BACTALERT bottle, a bottle with culture broth).

In both of these examples the liquid to be examined may be the transportation liquid, the decontamination liquid, the washing liquid, a preservation or cryo-preservation liquid.

Finally, it should be noticed that the inventive context may also cover cases in which removal applies to most but not all of the interfering factors, obviously depending on the aims of the removal.

### EXPERIMENTAL RESULTS

Below is a description of some experimental results for removal of interfering factors which were obtained using a device 1 made according to this invention, which in the chamber 6 with variable volume contained 0.5 g of a first resin constituted of Amberlite™ FPC3500, and 0.5 g of a second resin constituted of Amberlite™ XAD™18. Both of the resins had been activated beforehand using the normal washing operations required for such resins.

A series of validation tests were carried out on said device 1.

### ASSESSMENT OF THE PERFORMANCE OF THE DEVICE 1 ON CORNEA PRESERVATION LIQUIDS

The effectiveness of the device 1 according to this invention was initially tested relative to two liquids for the preservation of corneas called CARRY-C™ and TISSUE-C™, produced and marketed by Al.Chi.Mi.A. S.r.l. with registered office in Ponte S.Nicolò (Padua province), Italy.

In terms of composition, TISSUE-C™, which is a liquid exclusively for corneal preservation, comprises purified water, Penicillin, Streptomycin, Amphotericin B, MEM (powder), NEW BORN CALF SERUM, sodium pyruvate and sodium bicarbonate, whilst CARRY-C™, which is also a liquid for corneal deturgescence, comprises the same ingredients plus dextran T500.

The tests carried out allowed it to be demonstrated that the device 1 according to this invention permits the quick and easy removal of interfering factors (in particular antibiotics) from liquid samples before the microbiological negativity test. Use of the device 1 according to this invention was in particular validated for human cornea preservation media (TISSUE-C and CARRY-C) and its use proved compatible with standard microbiological negativity test methods.

However, further assessments are still in progress.

### Test 1: Removal of antibiotics from corneal preservation medium at 31 °C (TISSUE-C)

HPLC data show (Table 1) that the device 1 according to this invention allowed the removal of 100% of Streptomycin, Penicillin G and Amphotericin B which were initially present in 3 ml and 6 ml of TISSUE-C. Removal of the antibiotics with the device 1 according to this invention was also tested on TISSUE-C after preservation of the human cornea, a process during which the tissue releases into the culture medium metabolites and cellular residues which could interfere with the performance of the device 1 according to this invention. The device 1 according to this invention achieved total removal of antibiotics from TISSUE-C even after preservation of the human cornea (Table 1).

**Table 1**

| | | **Concentration (µg/ml)** | | |
|---|---|---|---|---|
| | | **Streptomycin** | **Penicillin G** | **Amphotericin B** |
| **TISSUE-C after corneal preservation (n=10)** | **Without antibiotic removal** | 116.6 | 0.6 | 0.5 |
| | **3 ml with removal of antibiotics with the device 1 according to this invention** | 0.00 | 0.00 | 0.00 |
| | **6 ml with removal of antibiotics with the device 1 according to this invention** | 0.00 | 0.00 | 0.00 |
| **TISSUE-C before corneal preservation (n=5)** | **Without antibiotic removal** | 126.2 | 2.45 | 1.00 |
| | **3 ml with removal of antibiotics with the device 1 according to this invention** | 0.00 | 0.00 | 0.00 |
| | **6 ml with removal of antibiotics with the device 1 according to this invention** | 0.00 | 0.00 | 0.00 |

### Test 2: Removal of antibiotics from corneal preservation and deturgescence medium at 31 °C (CARRY-C)

HPLC data show (Table 2) that the device 1 according to this invention allowed the removal of 100% of Streptomycin, Penicillin G and Amphotericin B which were initially present in 3 ml and 6 ml of CARRY-C. Removal of the antibiotics with the device 1 according to this invention was also tested after preservation of the human cornea and again in this case the device 1 according to this invention achieved total removal of the antibiotics.

**Table 2**

| | | **Concentration (µg/ml)** | | |
|---|---|---|---|---|
| | | **Streptomycin** | **Penicillin G** | **Amphotericin B** |
| **CARRY-C after corneal preservation (n=10)** | **Without antibiotic removal** | 121.8 | 0.9 | 0.5 |
| | **3 ml with removal of antibiotics with the device 1 according to this invention** | 0.00 | 0.00 | 0.00 |
| | **6 ml with removal of antibiotics with the device 1 according to this invention** | 0.00 | 0.00 | 0.00 |
| **CARRY-C before corneal preservation (n=5)** | **Without antibiotic removal** | 130.0 | 4.82 | 1.00 |
| | **3 ml with removal of antibiotics with the device 1 according to this invention** | 0.00 | 0.00 | 0.00 |
| | **6 ml with removal of antibiotics with the device 1 according to this invention** | 0.00 | 0.00 | 0.00 |

### Validation of the device 1 with the Monza Eye Bank (BOM)

Validation is in progress of the device 1 according to this invention on the liquids used for preserving and decontaminating corneal tissues at the Monza Eye Bank (BOM) (preservation liquids used: Tissue-C, CARRY-C and Eusol-C which is also produced and marketed by AI.Chi.Mi.A. S.r.l.). These tests involve a comparison of the result of the test to check for microbiological negativity for samples subjected to treatment using the device 1 according to this invention, with the result for samples subjected to the BOM standard procedure.

The tests are still in progress. However, up to now, using the device 1 in accordance with the invention, it has already been possible to identify false negatives.

### ASSESSMENT OF INTERACTIONS BETWEEN THE DEVICE 1 ACCORDING TO THIS INVENTION AND STRAINS OF BACTERIA

Treatment using the device 1 according to this invention must guarantee maintenance of the bacterial concentration and the vitality of the micro-organisms initially present in the samples treated.

Therefore, to assess any interactions between the device 1 and potential contaminants present in the samples to be treated, tests were carried out with the strains of bacteria indicated by the Pharmacopoeia (S. aureus ATCC6538, P. aeruginosa ATCC9027, C. albicans ATCC10231, B. subtilis ATCC6633, A. brasiliensis ATCC16404, C. sporogenes ATCC19404) to check the possibility of completely recovering what was previously inoculated. For each strain of bacteria between 1 and 10 CFU were inoculated in samples of liquid consisting of between 1.5 and 3 ml. Recovery studies carried out demonstrated that all of the strains indicated were recovered alive and with the same concentration both from the medium TISSUE-C without antibiotics and from the medium TISSUE-C with antibiotics, after the treatment with the device 1 according to this invention (20 minutes while being agitated at ambient temperature). Total recovery was also observed after initial inoculation of 1-10 CFU. The recovery data are summarised in Table 3.

**Table 3**

| **Recovery of reference micro-organisms (1-10 CFU, 10-100 CFU) after treatment using the device 1 according to this invention** | | | | |
|---|---|---|---|---|
| | **Preservation medium (TISSUE-C) without antibiotics** | | **Preservation medium (TISSUE-C) with antibiotics** | |
| | 1-10 CFU | 10-100 CFU | 1-10 CFU | 10-100 CFU |
| **Bacillus subtilis** | ++ | ++ | ++ | ++ |
| **Pseudomonas aeruginosa** | ++ | ++ | ++ | ++ |
| **Clostridium sporogenes** | ++ | ++ | ++ | ++ |
| **Staphylococcus aureus** | ++ | ++ | ++ | + |
| **Candida albicans** | ++ | ++ | ++ | ++ |
| **Aspergillus Niger** | ++ | ++ | ++ | ++ |

| | | | | |
|---|---|---|---|---|
| Legend: ++ total recovery; + partial recovery in the range 10-100 CFU. | | | | |

It may therefore be said that there is no interaction between the components of the device 1 and the strains of bacteria tested. Therefore the device 1 according to this invention does not interfere with the recovery of any contaminants present in the samples.

This invention brings important advantages.
In fact, the device and method developed allow the sample which must be subjected to microbiological examinations to be treated in such a way that the subsequent examinations can be carried out with results which are much more reliable than is currently the case.

Secondly, with reference to the transplant sector, this invention makes it possible to also detect bacterial contaminations which until now would have given false negatives.

Furthermore, if applied to examinations of biological fluids, as well as guaranteeing greater sensitivity this invention may allow a significant reduction in the quantity of sample needed in order to carry out the analysis, with particular benefits in the paediatric field.

Moreover, in general, all other aspects being equal, preliminary application of this invention allows a reduction in the times required by prior art equipment to detect a microbiological contamination.

Moreover, thanks to this invention, it was possible to develop a device which on one hand requires less manipulation by the user and can easily be left closed during the treatment time, and on the other hand can quickly and easily be used either for solid samples or for liquid samples.

Finally, it should be noticed that this invention is relatively easy to produce and that even the cost linked to implementing the invention is not very high.

## Claims

1. A ready-to-use device for removing interfering factors from samples to be subjected to microbiological examination, said interfering factors being any substance able to inhibit or slow bacterial reproduction on which microbiological examination of the samples is based comprising
an elongate containment body (2) extending between an open first end (3) and a second end (4);
a stopper (5) impermeable to liquids, inserted slidably and in a liquidtight fashion in the containment body (2) and movable between a first position in which it is close to the first end (3) and a second position in which it is distanced from the first end (3), a chamber (6) with variable volume being created in the containment body (2) between the stopper (5) and the first end (3);
a movement plunger (8) connected or connectable to the stopper (5) through the second end (4) of the containment body (2);
at least one product (7) in the form of granules for removing interfering factors inserted in said chamber (6),
a supply nozzle (9) connected to the first end (3) of the containment body (2);
a sealing separator (12) mounted in said nozzle (9) for closing it in a liquidtight fashion, the sealing separator (12) being made of elastomeric material;
a suction and injection unit (13) comprising a connecting element (14) connectable to said nozzle (9), a first needle (15) fixed to the connecting element (14) and extending outwards from the connecting element (14) when the connecting element (14) is connected to the nozzle (9), and a second needle (16) fixed to the connecting element (14) and extending inside the nozzle (9) when the connecting element (14) is connected to the nozzle (9), the second needle (16) comprising an inner transit opening which is smaller than the nominal size of the granules for preventing the granules from coming out of the chamber (6) through it;
wherein when the connecting element (14) is connected to the nozzle (9) the second needle (16) pierces the sealing separator (12), passes through it and puts in fluid communication the chamber (6) and the first needle (15), and wherein after a subsequent extraction of the second needle (16) from the sealing separator (12) the material of which the sealing separator (12) is made elastically closes the hole previously made by the second needle (16).

2. The device according to claim 1, wherein the containment body (2) comprises a containment part (10) extending between the first end (3) and the second end (4) and a cap (11) removably mounted on the **containment** part **(10)** for partly closing it at the first end (3), the nozzle (9) being associated with said cap (11), and removal of the cap (11) allowing access to said chamber (6).

3. The device according to claim 1 or 2, **characterised in that** the first needle (15) and the second needle (16) form a single part, the connecting element (14) being fixed to an intermediate portion of it.

4. The device according to any one of the preceding claims, wherein the suction and injection unit (13) also comprises a sheath (18) which covers the second needle (16) and which is pierceable by the second needle (16) when the suction and injection unit (13) is connected to the nozzle (9).

5. The device according to any one of the preceding claims, wherein the suction and injection unit (13) also comprises a connector (19) fixable to the nozzle (9) and to which the connecting element (14) can be removably connected.

6. The device according to any one of the preceding claims, **characterised in that** the product is a composition comprising a mixture of at least a first substance and a second substance, both in the form of granules, the first substance in turn comprising a first resin belonging to the ion exchange resins family, and the second substance in turn comprising a second resin belonging to the non-ionic hydrophobic resins family, the first substance and the second substance being present in a ratio by weight of between 0.5 and 2.

7. The device according to claim 6, **characterised in that** the first substance and the second substance are present in a ratio by weight of between 0.8 and 1.25.

8. The device according claim 6 or 7, **characterised in that** the first resin is methacrylate-divinylbenzene based and/or the second resin is polystyrene-divinylbenzene based.

9. The device according to any one of the preceding claims, wherein during use a liquid can be inserted into and removed from the chamber with variable volume only through the supply nozzle (9).

10. The device according to any one of the preceding claims, the device being intended for carrying out a preliminary process before a microbiological examination that is intended either to verify the microbiological negativity of a sample or to measure a degree and type of microbiological contamination of the sample, said preliminary process allowing to provide the microbiological examination with a sample purified of interfering factors.

11. A method for removing interfering factors from a sample to be subjected to microbiological examination, **characterised in that** it uses at least one device (1) according to any one of the preceding claims.

12. The method according to claim 11, wherein a plurality of said devices for removing interfering factors is used one after another in two or more steps one after another.

13. The method according to claim 11 or 12, wherein the sample is either a processing liquid for an organ, tissue or cells intended for transplantation, or a sample of an organ, tissue or cells intended for transplantation, or a bodily fluid taken from a living subject, or a bodily fluid taken from a deceased subject, or a medicine, or a substance derived from humans which is intended to be administered to a patient.

14. The method according to anyone of claims 11 to 13, wherein the step of using the device (1) comprises the operating steps of:
- connecting the connecting element (14) to the nozzle (9) in such a way that the second needle (16) pierces the sealing separator (12), passes through it and, through the first needle (15) and the second needle (16), puts the chamber (6) into fluid communication with the exterior;
- moving the stopper (5) from the first position to the second position and, through the first needle (15) and the second needle (16), sucking into the chamber a liquid to be subjected to removal of interfering factors;
- leaving the liquid in contact with the at least one product (7) in the form of granules for a predetermined period of time;
- subsequently moving the stopper (5) into the first position and, through the first needle (15) and the second needle (16), expelling the liquid from the chamber (6).

## Patentansprüche

1. Eine gebrauchsfertige Vorrichtung zur Beseitigung von Störfaktoren aus Proben, die einer mikrobiologischen Untersuchung zu unterziehen sind, wobei besagte Störfaktoren jede Substanz ist, die dazu imstande ist, bakterielle Reproduktion, auf der die mikrobiologische Untersuchung der Proben basiert, zu verhindern oder zu verlangsamen, umfassend
einen länglichen Behälterkörper (2), der sich zwischen einem offenen ersten Ende (3) und einem zweiten Ende (4) erstreckt;
einen flüssigkeitsundurchdringlichen Stopper (5), welcher verschiebbar und auf flüssigkeitsdichte Art in den Behälterkörper (2) eingesetzt ist und zwischen einer ersten Position, in der er nahe am ersten Ende (3) und einer zweiten Position, in der er vom ersten Ende (3) entfernt ist, bewegbar ist, eine Kammer (6) mit veränderlichem Volumen, welche im Behälterkörper (2) zwischen dem Stopper (5) und dem ersten Ende (3) geschaffen wird;
einen Bewegungskolben (8), der mit dem Stopper (5) durch das zweite Ende (4) des Behälterkörpers (2) verbunden oder verbindbar ist;
mindestens ein Produkt (7) in Form von Granulat zur Entfernung von Störfaktoren, das in besagte Kammer (6) eingefügt ist;
eine Zufuhrdüse (9), die mit dem ersten Ende (3) des Behälterkörpers (2) verbunden ist;
einen abdichtenden Trenner (12), welcher in besagter Düse (9) montiert ist, um diese auf flüssigkeitsdichte Art zu schließen, der abdichtende Trenner (12) ist dabei aus elastomerem Werkstoff hergestellt; eine Saug- und Injektionseinheit (13), welche ein Verbindungselement (14) umfasst, das mit besagter Düse (9) verbindbar ist, eine erste Nadel (15), welche am Verbindungselement (14) befestigt ist und sich vom Verbindungselement (14) nach außen erstreckt, wenn das Verbindungselement (14) mit der Düse (9) verbunden ist, und eine zweite Nadel (16), welche am Verbindungselement (14) befestigt ist und sich in die Düse (9) erstreckt, wenn das Verbindungselement (14) mit der Düse (9) verbunden ist, dabei umfasst die zweite Nadel (16) eine innere Durchlauföffnung, welche kleiner als die Nenngröße des Granulats ist, um zu verhindern, dass das Granulat durch sie aus der Kammer (6) austreten kann;
wobei, wenn das Verbindungselement (14) mit der Düse (9) verbunden wird, die zweite Nadel (16) den abdichtenden Trenner (12) durchsticht, ihn durchdringt und die Kammer (6) und die erste Nadel (15) in flüssige Verbindung zueinander bringt, und wobei, nach einer darauffolgenden Entfernung der zweiten Nadel (16) aus dem dichtenden Trenner (12), das Material, aus dem der dichtende Trenner (12) hergestellt ist, das Loch, welches vorher durch die zweite Nadel (16) hervorgerufen wurde, elastisch schließt.

2. Die Vorrichtung nach Patentanspruch 1, wobei der Behälterkörper (2) einen Behälterteil (10) umfasst, der sich zwischen dem ersten Ende (3) und dem zweiten Ende (4) erstreckt, und eine Kappe (11), die entfernbar am **Behälterteil (10)** montiert ist, um ihn teilweise am ersten Ende (3) zu verschließen, die Düse (9) ist dabei mit besagter Kappe (11) verbunden und das Entfernen der Kappe (11) erlaubt Zugang zu besagter Kammer (6).

3. Die Vorrichtung nach den Patentansprüchen 1 oder 2, **gekennzeichnet dadurch, dass** die erste Nadel (15) und die zweite Nadel (16) ein einziges Teil bilden, wobei das Verbindungselement (14) an einem mittleren Abschnitt davon befestigt ist.

4. Die Vorrichtung nach einem der vorherigen Patentansprüche, wobei die Saug- und Injektionseinheit (13) auch eine Hülle (18) umfasst, welche die zweite Nadel (16) bedeckt und von der zweiten Nadel (16) durchstechbar ist, wenn die Saug- und Injektionseinheit (13) mit der Düse (9) verbunden wird.

5. Die Vorrichtung nach einem der vorherigen Patentansprüche, wobei die Saug- und Injektionseinheit (13) auch einen Verbinder (19) umfasst, welcher an der Düse (9) befestigt werden kann und mit dem das Verbindungselement (14) entfernbar verbunden werden kann.

6. Die Vorrichtung nach einem der vorherigen Patentansprüche, **gekennzeichnet dadurch, dass** das Produkt eine Zusammensetzung ist, welche eine Mischung aus mindestens einer ersten Substanz und einer zweiten Substanz, beide in Form von Granulat, umfasst, wobei die erste Substanz ihrerseits ein erstes Harz umfasst, welches zu der Familie der Ionenaustauschharze gehört, und die zweite Substanz ihrerseits ein zweites Harz umfasst, welches zur Familie der nichtionischen, hydrophoben Harze gehört, die erste Substanz und die zweite Substanz sind dabei in einem Gewichtsverhältnis zwischen 0,5 und 2 vorhanden.

7. Die Vorrichtung nach Patentanspruch 6, **gekennzeichnet dadurch, dass** die erste Substanz und die zweite Substanz in einem Gewichtsverhältnis zwischen 0,8 und 1,25 vorhanden sind.

8. Die Vorrichtung nach den Patentansprüchen 6 oder 7, **gekennzeichnet dadurch, dass** das erste Harz auf Methacrylat-Divinylbenzol basiert und/oder das zweite Harz auf Polystyrol-Divinylbenzol basiert.

9. Die Vorrichtung nach einem der vorherigen Patentansprüche, wobei während der Verwendung eine Flüssigkeit nur durch die Zufuhrdüse (9) in die Kammer mit variablem Volumen eingeführt und daraus entfernt werden kann.

10. Die Vorrichtung nach einem der vorherigen Patentansprüche, wobei die Vorrichtung dazu vorgesehen ist, ein Vorverfahren vor einer mikrobiologischen Untersuchung auszuführen, welches entweder dazu vorgesehen ist, die mikrobiologische Negativität einer Probe zu überprüfen oder einen Grad und einen Typ mikrobiologischer Kontamination der Probe zu messen, besagtes Vorverfahren erlaubt es dabei, für eine mikrobiologische Untersuchung mit einer von Störfaktoren gereinigten Probe zu sorgen.

11. Eine Methode zur Entfernung von Störfaktoren aus einer Probe, welche einer mikrobiologischen Untersuchung zu unterziehen ist, **gekennzeichnet dadurch, dass** dabei mindestens eine Vorrichtung (1) nach den vorherigen Patentansprüchen verwendet wird.

12. Die Methode nach Patentanspruch 11, wobei eine Mehrzahl besagter Vorrichtungen zur Entfernung von Störfaktoren nacheinander in zwei oder mehr aufeinander folgenden Schritten verwendet wird.

13. Die Methode nach den Patentansprüchen 11 oder 12, wobei die Probe entweder eine Prozessflüssigkeit für ein Organ, für Gewebe oder Zellen, welche(s) zur Transplantation vorgesehen ist/sind, ist, oder die Probe eines Organs, Gewebes oder von Zellen, welche(s) zur Transplantation vorgesehen ist/sind, oder eine Körperflüssigkeit, welche einem lebenden Subjekt entnommen wurde, oder eine Körperflüssigkeit, welche einem verstorbenen Subjekt entnommen wurde, oder ein Medikament, oder eine von Menschen stammende Substanz, **welche dazu vorgesehen ist, einem Patienten verabreicht zu werden.**

14. Die Methode nach einem der Patentansprüche 11 bis 13, wobei der Schritt der Verwendung der Vorrichtung (1) folgende Arbeitsschritte umfasst:
- Verbindung des Verbindungselements (14) mit der Düse (9) auf solch eine Weise, dass die zweite Nadel (16) den abdichtenden Trenner (12) durchsticht, ihn durchdringt und, durch die erste Nadel (15) und die zweite Nadel (16), die Kammer (6) in flüssige Verbindung mit dem Außenbereich bringt;
- Bewegung des Stoppers (5) von der ersten Position in die zweite Position und, durch die erste Nadel (15) und die zweite Nadel (16), Einsaugen einer Flüssigkeit, welche der Entfernung von Störfaktoren unterzogen werden soll, in die Kammer;
- Belassen der Flüssigkeit in Kontakt mit mindestens einem Produkt (7) in Granulatform für einen vorher festgelegten Zeitraum;
- darauf folgende Bewegung des Stoppers (5) in die erste Position und, durch die erste Nadel (15) und die zweite Nadel (16), Ausstoß der Flüssigkeit aus der Kammer (6).

## Revendications

1. Un dispositif prêt à l'emploi pour éliminer les facteurs d'interférences d'échantillons à soumettre à un examen microbiologique, lesdits facteurs d'interférence étant toute substance pouvant inhiber ou ralentir la reproduction bactérienne sur laquelle se base l'examen microbiologique des échantillons, comprenant
un corps de confinement allongé (2) s'étendant entre une première extrémité ouverte (3) et une deuxième extrémité (4) ;
un obturateur (5) imperméable aux liquides, inséré de façon coulissante et de façon étanche aux liquides dans le corps de confinement (2) et mobile entre une première position dans laquelle il est proche de la première extrémité (3) et une deuxième position dans laquelle il est espacé de la première extrémité (3), une chambre (6) à volume variable étant créée dans le corps de confinement (2) entre l'obturateur (5) et la première extrémité (3) ;
une tige d'actionnement (8) reliée ou pouvant être reliée à l'obturateur (5) à travers la deuxième extrémité (4) du corps de confinement (2) ;
au moins un produit (7) sous forme de granules pour l'élimination des facteurs d'interférence inséré dans ladite chambre (6),
une buse d'alimentation (9) raccordée à la première extrémité (3) du corps de confinement (2) ;
un séparateur étanche (12) monté dans ladite buse (9) pour la fermer de façon étanche aux liquides, le séparateur étanche (12) étant réalisé en élastomère ;
une unité d'aspiration et d'injection (13) comprenant un élément de raccord (14) pouvant être raccordé à ladite buse (9), une première aiguille (15) fixée à l'élément de raccord (14) et s'étendant vers l'extérieur de l'élément de raccord (14) quand ledit élément de raccord (14) est raccordé à la buse (9), et une deuxième aiguille (16) fixée à l'élément de raccord (14) et s'étendant à l'intérieur de la buse (9) quand l'élément de raccord (14) est raccordé à la buse (9), la deuxième aiguille (16) comprenant une ouverture intérieure de passage qui est inférieure à la taille nominale des granules pour empêcher ces mêmes granules de sortir de la chambre (6) à travers elle ;
dans lequel, quand l'élément de raccord (14) est raccordé à la buse (9), la deuxième aiguille (16) perce le séparateur étanche (12), passe à travers lui et met en communication de fluide la chambre (6) et la première aiguille (15), et dans lequel, suite à une extraction successive de la deuxième aiguille (16) du séparateur étanche (12), le matériau avec lequel est réalisé le séparateur étanche (12) ferme élastiquement le trou précédemment réalisé par la deuxième aiguille (16).

2. Le dispositif selon la revendication 1, dans lequel le corps de confinement (2) comprend une partie de confinement (10) s'étendant entre la première extrémité (3) et la deuxième extrémité (4) et un bouchon (11) monté de façon amovible sur la partie de confinement (10) pour la fermer partiellement au niveau de la première extrémité (3), la buse (9) étant associée audit bouchon (11), et la dépose du bouchon (11) permettant d'accéder à ladite chambre (6).

3. Le dispositif selon la revendication 1 ou 2, **caractérisé en ce que** la première aiguille (15) et la deuxième aiguille (16) forment une pièce unique, l'élément de raccord (14) étant fixé à une portion intermédiaire de celle-ci.

4. Le dispositif selon l'une quelconque des revendications précédentes, dans lequel l'unité d'aspiration et d'injection (13) comprend aussi une gaine (18) qui couvre la deuxième aiguille (16) et qui peut être percée par la deuxième aiguille (16) quand l'unité d'aspiration et d'injection (13) est raccordée à la buse (9).

5. Le dispositif selon l'une quelconque des revendications précédentes, dans lequel l'unité d'aspiration et d'injection (13) comprend aussi un connecteur (19) pouvant être fixé à la buse (9) et auquel l'élément de raccord (14) peut être raccordé de façon amovible.

6. Le dispositif selon l'une quelconque des revendications précédentes, **caractérisé en ce que** le produit est une composition comprenant un mélange d'au moins une première substance et une deuxième substance, toutes deux sous la forme de granules, la première substance comprenant à son tour une première résine appartenant à la famille des résines échangeuses d'ions, et la deuxième substance comprenant à son tour une deuxième résine appartenant à la famille des résines hydrophobes non ioniques, la première substance et la deuxième substance étant présentes dans un rapport en poids compris entre 0,5 et 2.

7. Le dispositif selon la revendication 6, **caractérisé en ce que** la première substance et la deuxième substance sont présentes dans un rapport en poids compris entre 0,8 et 1,25.

8. Le dispositif selon la revendication 6 ou 7, **caractérisé en ce que** la première résine est à base de méthacrylatedivinylbenzène et/ou la deuxième résine est à base de polystyrènedivinylbenzène.

9. Le dispositif selon l'une quelconque des revendications précédentes, dans lequel, pendant l'utilisation, un liquide peut être inséré dans et enlevé de la chambre à volume variable uniquement à travers la buse d'alimentation (9).

10. Le dispositif selon l'une quelconque des revendications précédentes, tel dispositif étant prévu pour effectuer un processus préliminaire avant un examen microbiologique qui est destiné à vérifier la négativité microbiologique d'un échantillon ou à mesurer un degré et type de contamination microbiologique de l'échantillon, ledit processus préliminaire permettant de fournir à l'examen microbiologique un échantillon purifié des facteurs d'interférence.

11. Un procédé pour éliminer les facteurs d'interférence d'un échantillon à soumettre à un examen microbiologique, **caractérisé en ce qu'**il utilise au moins un dispositif (1) selon l'une quelconque des revendications précédentes.

12. Le procédé selon la revendication 11, dans lequel une pluralité desdits dispositifs pour éliminer les facteurs d'interférence sont utilisés l'un après l'autre en deux phases ou plus successives.

13. Le procédé selon la revendication 11 ou 12, dans lequel l'échantillon est soit un liquide de traitement pour un organe, tissu ou cellules destinés à une transplantation, soit un échantillon d'un organe, tissu ou cellules destinés à une transplantation, soit un fluide corporel prélevé chez un sujet vivant, soit un fluide corporel prélevé chez un sujet décédé, soit un médicament, soit une substance de dérivation humaine, qui est destiné à être administré à un patient.

14. Le procédé selon l'une quelconque des revendications de 11 à 13, dans lequel la phase d'utilisation du dispositif (1) comprend les phases opérationnelles consistant à :
- raccorder l'élément de raccord (14) à la buse (9) de manière à ce que la deuxième aiguille (16) perce le séparateur étanche (12), passe à travers lui et, à travers la première aiguille (15) et la deuxième aiguille (16), mette la chambre (6) en communication de fluide avec l'extérieur ;
- déplacer l'obturateur (5) de la première position à la deuxième position et, à travers la première aiguille (15) et la deuxième aiguille (16), aspirer dans la chambre un liquide à soumettre à l'élimination de facteurs d'interférence ;
- laisser le liquide en contact avec ledit au moins un produit (7) sous la forme de granules pendant un intervalle de temps prédéfini ;
- après quoi, déplacer l'obturateur (5) dans la première position et, à travers la première aiguille (15) et la deuxième aiguille (16), évacuer le liquide de la chambre (6).
